# EUROPEAN PATENT APPLICATION

(11) **EP 1 231 238 A1**
(43) Date of publication of application: **14.08.2002**
(21) Application number: 01102998.0
(22) Date of filing: 08.02.2001
(51) Int. Cl.: C08L 23/04, G02B 6/44, C08K 5/14

(54) **Multimodal polyethylene resin composition for fibre supporting elements for fibre optic cables**

(71) Applicant: Borealis Technology Oy, 06101 Porvoo (FI)
(72) Inventor: Martinsson, Hans-Bertil, S-472 95 Varekil (SE); Dammert, Ruth, S-444 41 Stenungsund (SE)
(74) Representative: Kador & Partner

(57) **Abstract**

The present invention relates to a multimodal polyethylene resin composition for fibre supporting elements for fibre optic cables having a MFR₅ of 0.10 to 1.0 g/10 min, a density of 935 to 960 kg/m³ and a flow rate ratio FRR_{21/5} of 30 to 150. These resins can be obtained by a process comprising the treatment of a base resin (C), which comprises a low molecular weight component (A) and a high molecular weight component (B), in the presence of free radical initiators to incorporate long chain branches. Furthermore, the invention relates to an optical fibre supporting element comprising the multimodal polyethylene resin composition and to a fibre optic cable comprising such optical fibre supporting elements.

## Description

The present invention relates to a multimodal polyethylene resin composition for fibre supporting elements for fibre optic cables, to an optical fibre supporting element comprising the multimodal polyethylene resin composition and to a fibre optic cable comprising such fibre supporting elements.

### Technical Background

Fibre optical cables which are used for the transmission of information include hair thin optical fibres as transmission medium. These cables have found widespread applications in public telecommunication, networks and local area network (LAN) systems and also in automation, video transmission and other special fields. The optical fibres in the cables are protected by a cable construction which protects the fibres from all kinds of stresses during manufacturing, storage, transport, installation and operation. The construction should secure and maintain the transmission characteristics of the optical fibres for the whole estimated lifetime of the cable which may amount up to 30 years.

An optical cable usually consists of the functional elements: fibres and their protective coating, fibre supporting element (also denoted as cable core construction), strength member, filling compound and other water blocking material, and sheath (including possible additional protection). Among these functional elements, the fibre supporting element is of particular importance to protect the optical fibres from external forces and other detrimental influences.

In general, three basic cable constructions are known which require different types of fibre supporting elements.

First, in the stranded construction secondary coated fibres or fibre bundles are stranded concentrically around the central fibre supporting element. The central element in the stranded construction also has the function of strength member. Second, the single tube construction consists of one plastic tube containing primary coated fibres. The fibres are located loosely within the tube and are grouped into bundles for identification and management of fibres. Third, the slotted core construction consists of a plastic rod or metallic wire with longitudinal slots (or grooves). The slots pass around the core helically or changing periodically the direction (so-called SZ-mode). Primary coated fibres are located loosely in the slots. Generally, the slotted core construction comprises a central strength member of steel or fibre reinforced plastic (FRP).

The slotted core construction has very high crush strength and structural clarity for installation. The fibres are easily accessible for splicing and termination. The diameter of the slotted core in general is between 6 and 12 mm depending on the fibre count. The strength member is located in the central axis of the slotted core.

Although the core construction of a fibre optical cable may be whichever of the above mentioned constructions, the most preferred construction is the slotted core construction, because it enables a very high packing density of fibre ribbons, a clear structure and a good protection.

In the cable constructions, the fibres may be inserted into the fibre supporting element as individual fibres, fibre ribbons, or fibre bundles according to the type of element used.

It is known in the art to build up the fibre supporting elements by metallic or non-metallic materials, including polymer compositions. To provide lightweight cable constructions it is desired that the fibre supporting elements consist of material as lightweight as possible.

The fibre supporting elements such as the slotted core elements have to fit very exacting requirements. This in turn puts severe requirements on the materials used for these elements. It is known in the art to make the elements of polymer materials by melt extrusion. The elements extruded thereby reach lengths up to 25-30 km.

For easy and economic production the polymer material should have good melt processability. This implies, particularily when the extruder line speed is increased, that high melt pressures and melt fracture, which results in uneven, rough surface, should be avoided. Further, to cope with the mechanical stresses it is exposed to in use, for example the radial forces during and after laying of the optical fibre cable, the polymer material should have good mechanical properties such as sufficient strength in the solid state. Further, and very important particularly to the slotted core type element, the polymer material should have good dimensional stability and stiffness to keep the profile shapes stable, so that the ridges of the slotted core are not deformed or do not collapse. This is especially important when the melt comes out of the extruder. Moreover, the material should have good long term stability. Another important property is the melt strength of the material which should be high, and the polymer material should have a low shrinkage.

Many of these requirements are opposed to each other, i.e. if one property of the polymer material is optimized, another property is likely to be deleteriously effected.

Thus, it is an object of the present invention to provide an improved polymer material for fibre supporting elements for fibre optical cables, more particularly for slotted core elements, with superiour characteristics, especially with respect to the above-mentioned properties. Particularly, it is an object of the present invention to provide a polymer material with improved dimensional stability.

Further, it is an object of the present invention to provide an optical fibre supporting element comprising such a polymer material and a fibre optical cable comprising such elements.

### Summary of the Invention

The present invention is based on the finding that the objects of the invention can be solved by a multimodal polyethylene resin composition which has been treated to incorporate long chain branches.

The present invention therefore provides a multimodal polyethylene resin composition for fibre supporting elements for fibre optical cables with an MFR₅ of 0.10 to 1.0 g/10 min, a density of 935 to 960 kg/m³ and a flow rate ratio FRR_{21/5} of 30 to 150. This composition is obtainable by a process which comprises the treatment of a base resin (C), which comprises a low molecular weight component (A) and a high molecular weight component (B), in the presence of free radical initiators to incorporate long chain branches.

Further, the present invention provides optical fibre supporting elements comprising the inventive multimodal polyethylene resin composition and a fibre optical cable comprising such fibre supporting elements.

The inventive multimodal polyethylene resin composition combines the properties of excellent processability, excellent mechanical properties and excellent dimensional stability. Especially, it has a high melt strength without giving rise to problems in the production process of the fibre supporting elements.

Further, the invention provides an optical fibre supporting element which comprises the multimodal polyethylene resin composition. These elements show excellent dimensional stability and long term stability.

The invention also provides fibre optical cables which comprise the fibre supporting elements with superior properties due to the above-mentioned properties of the multimodal polyethylene resin composition of the optical fibre supporting elements.

### Detailed Description of the Invention

In the following the present invention is further illustrated by the description of preferred embodiments.

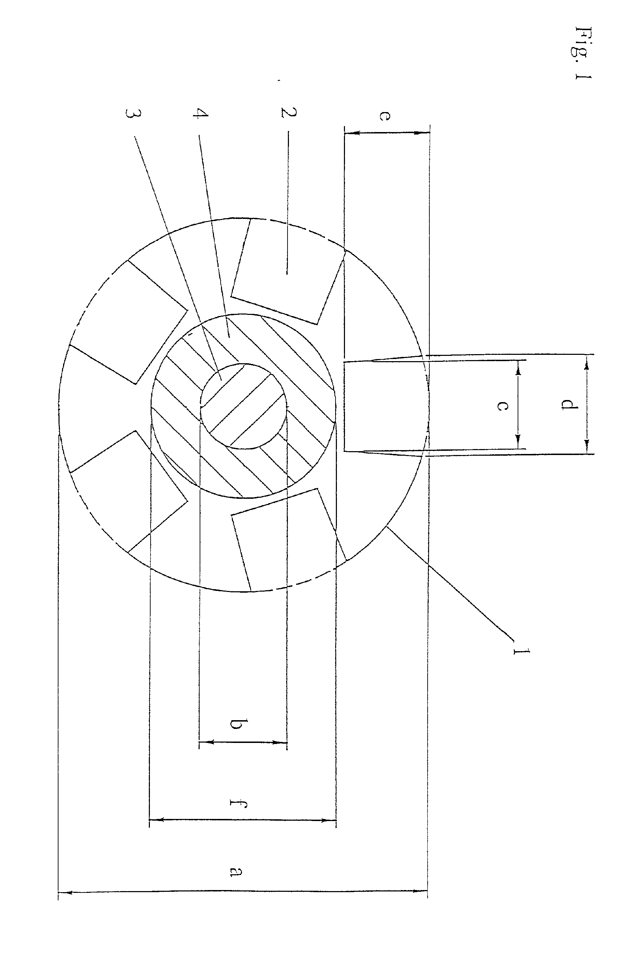

Figure 1 shows a cross section of a slotted core as produced according to example 3.

In a preferred embodiment the multimodal polyethylene resin composition has an MFR₅ of 0.15 to 0.5 g/10 min. A preferred density is from 942 to 955 kg/m³ and a preferred flow rate ratio FRR_{21/5} is in the range from 30 to 60. By selecting a multimodal polyethylene resin composition with one or more of these preferred parameters the processing properties, mechanical properties and dimensional stability are further improved.

In a further preferred embodiment, the low molecular weight component (A) of the multimodal polyethylene resin composition is a homopolymer of ethylene containing less than 0.5 % by weight units derived from C₃ to C₂₀ alpha-olefins comonomers, more preferably less than 0.1 % by weight of such units.

Preferably the multimodal polyethylene resin composition is a bimodal composition.

The average molecular weight of component (A) is preferably between 5,000 to 50,000 g/mole, and more preferably between 10,000 to 40,000 g/mole.

Component (A) has a melt flow rate MFR₂ of preferably 50 to 2,000 g/10 min, more preferably of 100 to 1,000 g/10 min and particularly preferred of 250 to 800 g/10 min.

The density of component (A) is preferably in the range from 940 to 980 kg/m³, more preferably from 950 to 980 kg/m³ and particularly preferred from 960 to 975 kg/m³. The density of component (A) may be varied according to the nature and the content of comonomer. In general, if no comonomer is used the density will be higher than 970 kg/m³.

In a further preferred embodiment the low molecular weight component (A) of the multimodal polyethylene resin composition is a homopolymer of ethylene containing less than 0.5 % by weight units derived from C₃ to C₂₀ alpha-olefin comonomers, more preferably less than 0.1 % by weight of such units.

In a further preferred embodiment the high molecular weight component (B) of the multimodal polyethylene resin composition is a copolymer of ethylene and at least one alpha-olefin copolymer having from C₃ to C₂₀ carbon atoms. It contains from 0.05 to 10 % by mole, preferably from 0.1 to 4.0 % by mole alpha-olefin copolymer units.

Component (B) has preferably an average molecular weight of 100,000 to 1,000,000 g/mole, and more preferably of 300,000 to 900,000 g/mole.

In a further preferred embodiment the base resin (C) has a density of 935 to 960 kg/m³.

Base resin (C) has preferably a melt flow rate MFR₅ of 0.1 to 1.0 g/10 min, more preferably of 0.2 to 0.9 g/10 min and particularly preferred from 0.2 to 0.8 g/10 min.

It has preferably a flow rate ratio FRR_{21/5} of 10 to 130, more preferably of 20 to 70 and particularly preferred of 25 to 50.

In a further preferred embodiment the FRR_{21/5} value of the final multimodal polyethylene resin is from 20 to 80% higher than the corresponding value of the base resin (C).

The properties of the base resin (C) can be adjusted by the percentage of component (B) in the base resin (C) according to the molecular weight and the comonomer content of component (B).

In the multimodal polyethylene resin composition the ratio (A):(B) of components (A) and (B) is preferably in the range of 40:60 to 60:40. More preferably, this ratio is in the range of 40:60 to 50:50, and particularly preferred this ratio is in the range of 44:56 to 50:50.

The multimodal polyethylene resin composition according to the present invention comprises the treatment of a base resin (C) in the presence of free radical initiators to incorporate long chain branches. This treatment by free radical initiators can be carried by any method known in the art.

For example, such methods are presented in WO 97/47868. The contents of this document is included by reference. One of the methods described in WO 97/47868 is that a free radical initiator is added to the polymer powder, i.e. the base resin (C), and the mixture of polymer powder and free radical initiator is introduced into an extruder. At the conditions present in the extruder the free radical initiator decomposes and generates free radicals.

The free radicals thus generated cause the production of long chain branches in the polymer and hence its rheological properties are advantageously modified, as shown for example by an increase of the flow rate ratio FRR_{21/5}. The modification of the rheological properties leads e.g. to an improved processability of the polymer.

In the present invention, any free radical initiator having a suitable decomposition temperature may be used. Preferably, the half life of the initiator during ten hours is from 40 to 300°C, more preferably from 110 to 270°C.

Examples of suitable free radical initiators are azo compounds like azobisisobutyronitrile, peroxy compounds like diacylperoxides, acetyl alkylsulfonylperoxides, dialkylperoxycarbonates, tert-alkylperoxyesters, OO-tert-alkyl-O-alkylmonoperoxycarbonates, di(tert-alkylperoxy)ketals, di(tert-alkyl)peroxides, tert-akylhydroperoxides and ketoneperoxides and redox initiators.

Especially preferred initiators are peroxy compounds. Examples of these are dibenzoylperoxide, di-(2,4-dichlorobenzoyl)peroxide, diacetylperoxide, dilauroylperoxide, didecanoylperoxide, di-isononanylperoxide, succinic acid peroxide, di-tert-butyldiperoxyphtalate, tert-butylperoxybenzoate, tert-butylperacetate, tert-amylperbenzoate, 2,5-di(benzoylperoxy)-2,5-dimethylhexane, tert-butylperoxymaleic acid, tert-butylperoxyisobutyrate, tert-butylperoxy-2-ethylhexanoate, tert-butylperoctoate, tert-amylperoctoate, 2,5-di(ethylhexanoylperoxy)-2,5-dimethylhexane, tert-butylperoxypivalate, tert-amylperoxypivalate, α-cumylperoxyneodecanonate, ethyl-3,3-di(tert-butylperoxy)butyrate, ethyl-3,3-di(tert-amylperoxy)butyrate, n-butyl-4,4-di(tert-butylperoxy)valerate, 2,2-di(tert-butylperoxy)butane, 1,1-di-tert-butylperoxycyclohexane, 2,5-(tert-butylperoxy)-2,5 dimethyl-3-hexyne, bis(tert-butylperoxyisopropyl)benzene, di-tertbutylperoxide, tert-butyl-α-cumylperoxide, 2,5-(tert-butylperoxy)-2,5 dimethylhexane, dicumylperoxide, di-n-propylperoxycarbonate, di-isopropylperoxycarbonate, dicetylperoxycarbonate, di-sec-butylperoxycarbonate, tert-butylhydroperoxide, tert-amylhydroperoxide, cumene hydroperoxide, 2,5-di(2-hydroxyperoxy)-2,5-dimethylhexane, pinane hydroperoxide and di-isopropylbenzene hydroperoxide.

Especially preferred peroxy initiators are 2,5-(tert-butylperoxy)-2,5 dimethyl-3hexyne, dicumylperoxide, 2,5-(tert-butylperoxy)-2,5 dimethylhexane, di-tertbutylperoxide, bis(tert-butylperoxyisopropyl)benzene, tert-butyl-α-cumylperoxide, n-butyl-4,4-di(tert-butylperoxy)valerate, 1,1-di-tert-butylperoxycyclohexane, tert-butylperoxybenzoate, dibenzoylperoxide, di-(2,4-dichlorobenzoyl)peroxide, 2,2-di(tert-butylperoxy)butane and ethyl-3,3-di(tert-butylperoxy)butyrate.

Most preferred initiators are 2,5-(tert-butylperoxy)-2,5-dimethylhexane, bis (tert-butylperoxy-isopropyl) benzene and dicumylperoxide.

The free radical initiators can be added to the polymer resin before it is introduced into the machine in which the treatment takes place. It is, however, also possible to feed the initiator directly to said machine.

Preferably, the free radical initiator is added as a masterbatch. This means, that the initiator has been mixed with a polymer before it is added to the base resin (C).

The concentration of the free radical initiator per base resin (C) depends on the specific initiator used. For example, for the initiator dicumylperoxide a suitable concentration is from 50 to 2000 ppm, preferably 100 to 500 ppm. The concentration of the free radical initiator must be high enough to cause the desired degree of long chain branching in the base resin (C), however, it should not be so high that the resin is negatively affected.

The treatment of base resin (C) can be carried out in any suitable heated machine which melts the base resin (C) and exerts shearing forces upon the resin. For example, such machines are extruders, calanders, kneaders, mixers, etc. Preferably, an extruder is used.

The free radical initiators can be introduced to any part of the machine. For example in an extruder it can be introduced in the feed zone, melting zone and/or conveying zone.

The temperature in the heated machine must be such that the base resin (C) is properly melted and the free radical initiator can decompose. However, the temperature should not be so high that the base resin (C) starts to degrade.

Preferably, the temperature is between 150°C and 330°C, more preferably between 170°C and 270°C.

The polyethylene components (A) and (B) may be produced using any known method were ethylene is polymerized in the presence of a Ziegler or a single site catalyst. Thus, (A) and (B) may be produced by a solution polymerization process, a slurry polymerization process or a gas phase polymerization process.

The base resin (C) may also be produced in a multistage process as e.g. disclosed in EP-B-517868 and WO-A-96/18662.

Typically, the polymerization takes place in the presence of a Ziegler catalyst as e.g. discosed in EP-A-688794 and EP-A-949274. It is also possible to use a single site catalyst as e.g. disclosed in FI-A-960437.

Preferably, the base resin (C) is produced by producing the low molecular weight component (A) in one stage of a multistage polymerization process and the higher molecular weight component (B) in another stage of this process.

Particularly preferred, the low molecular weight ethylene polymer (A) is produced in a continuously operating loop reactor where ethylene is polymerized in the presence of a polymerization catalyst and a chain transfer agent, such as hydrogen. An inert aliphatic hydrocarbon like isobutane or propane is used as a diluent. Preferably, no or only traces of a higher alpha-olefin comonomer is present. The hydrogen concentration should be selected so that the low molecular weight ethylene polymer (A) has the desired melt flow rate MFR₂. Typically, the molar ratio of hydrogen to ethylene is between 0.1 and 1.0 mol/mol, preferably between 0.2 and 0.8 mol/mol. Typically, the average residence time in the loop reactor is from 0.5 to 2 hours.

Preferably, the loop reactor is operated using propane diluent in so-called supercritical conditions. This means that the operating temperature exceeds the critical temperature of the reaction mixture and the operating pressure exceeds the critical pressure of the reaction mixture. A suitable range of temperature is then from 90 to 110°C, preferably from 93 to 100°C, and a suitable range of pressure is from 50 to 80 bar.

The slurry is intermittently or continuously removed from the loop reactor to a separation unit, where the hydrocarbons and especially the chain transfer agent are separated from the polymer. The polymer containing the active catalyst is introduced into a gas phase reactor where the polymerization proceeds in the presence of additional ethylene, alpha-olefin comonomer, and optionally chain transfer agent, to produce the high molecular weight ethylene copolymer component (B).

The base resin (C) comprising components (A) and (B) is then intermittently or continuously withdrawn from the gas phase reactor and the remaining hydrocarbons are seperated from the resin.

The reaction conditions in the gas phase reactor are selected so that the base resin (C) has the desired properties. Typically, the temperature in the reactor is between 70 and 100°C and the pressure is between 10 and 40 bar. The hydrogen to ethylene molar ratio ranges from 0.001 to 0.1 mol/mol and the alpha-olefin comonomer to ethylene molar ratio ranges from 0.05 to 0.5 mol/mol. Typically, the average residence time in the gas phase reactor is from 1 to 5 hours.

Preferably, the gas phase reactor is a fluidized bed reactor.

In addition to the components already described, the inventive multimodal polyethylene resin composition may further comprise different additives, such as e.g. filler, stabilizers, antioxidants etc.

### Definitions

The melt flow rate (MFR) is measured according to ISO 1133 at 190°C. The load under which the MFR is measured is indicated as a subscript, i.e. MFR₂ denotes that the measurement has been carried out under a load of 2.16 kg, MFR₅ denotes that the measurement has been carried out under a load of 5 kg and MFR₂₁ denotes that the measurement has been carried out under a load of 21.6 kg.

The flow rate ratio (FRR) denotes the ratio between two melt flow rates measured under different loads. These loads are indicated as subscript. Thus, FRR_{21/2} denotes the ratio of melt flow rates MFR₂₁ and MFR₂ and FRR_{21/5} denotes the ratio of melt flow rates MFR₂₁ and MFR₅. The larger the value of the flow rate ratio, the broader is the molecular weight distribution of the measured polymer.

### Examples

### Example 1

Into a continuously operating loop reactor were introduced propane diluent, ethylene, hydrogen and a polymerisation catalyst which was prepared according to Example 2 of WO 99/51646. As a cocatalyst triethylaluminium was used and the Al/Ti molar ratio was 30. The overall pressure in the reactor was 61 bar and the temperature was 95 °C. The ethylene concentration was 6.8 % by mole and the H₂/C₂-ratio was 450 mol/kmol. A polymer production rate of 24 kg/h was obtained and the resulting homopolymer of ethylene had an MFR₂ of 390 g/10 min and density of 975 kg/m³.

The polymer was intermittently withdrawn from the reactor, the hydrocarbons were separated from the polymer and the polymer was introduced into a fluidized bed gas phase reactor where additional ethylene, 1-butene comonomer and hydrogen were introduced. The overall pressure in the reactor was 20 bar and the temperature was 85 °C. The H₂/C₂-ratio was 14 mol/kmol and the 1-C₄/C₂-ratio was 110 mol/kmol. About 50 kg/h of a polymer with a split loop/gas phase reactor of 48/52, a MFR₅ of 0.51 g/10 min, a MFR₂₁ of 16.4 g/10 min and a density of 947 kg/m³ was withdrawn from the reactor. Thus, the FRR_{21/5} was 32.

### Example 2

Into the ethylene polymer composition produced according to Example 1, 1% by weight of a composition comprising (a) 98% by weight of a low density polyethylene having a melt flow rate MFR₂ of 2 g/10 min, and (b) 2 % by weight of dicumylperoxide was added and the composition was pelletised in a full-scale extruder. The samples were then treated in a Banbury mixer to react the peroxide. The batch size was 50 kg. The temperature was 190-200°C and residence time about 120 seconds in order for the peroxide to react.

The pellets were collected and analyzed. The MFR₅ was 0.29 g/10 min, the MFR₂₁ was 13.1 g/10 min and the density was 942 kg/m³. Thus, the FRR_{21/5} was 45. For melt fracture measurements capillary rheological tests were made at a temperature of 190 °C on Göttfert Rheograph 2002. A round annular die with L/D ratio of 30:1 was used. Viscosity measurements were run at shear rates from 10 to 5000 l/s. The viscosity function was determined from these runs. The melt fracture was determined visually during the tests. The shear rate at which the extrudate started to show melt fracture was given as the value of onset of melt fracture (in l/s). The onset of the melt fracture was determined for both the base resin and the peroxide treated resin and was found to be 230 l/s for the base resin and 1150 l/s for the modified resin, indicating that the modified resin has superior processability compared to the base resin. Results are summarized in Table 1.

**Table 1:**

| Property | Base resin Example 1 | Modified resin Example 2 |
|---|---|---|
| MFR₅, g/10 min | 0.51 | 0.29 |
| MFR₂₁, g/10 min | 16.5 | 13.1 |
| FRR_{21/5} | 32 | 45 |
| Onset of melt fracture, l/s | 230 | 1150 |

### Example 3

Slotted core profiles (1) were extruded on a Nextrom machine, OFC 62. Helical type of profiles was made, according to figure 1. The outer diameter (a) was 10 mm and the number of slots (2) was 5. Stainless steel was used as strength member (3). Diameter (b) of the strength member (3) was 2.3 mm. The slot width at the bottom (c) was 2.4 mm and 2.7 mm at the top (d). The slot depth (e) was 2.3 mm.

A bimodal HDPE was used as pre-layer material (4) with an outer diameter (f) of 4.95 mm and a chemically modified polyethylene was used an adhesive layer between the steel wire and the pre-layer material.

The surface quality, the profile dimensions and occurence of melt fracture was observed during the test trial. Melt fracture was determined as uneven surface during the extrusion of the slotted core profiles. It was determined as the line speed at which uneven surface was observed.

The surface quality and profile geometry is ranked between 1 and 10, where 10 is excellent. The results are gathered in Table 2.

No melt fracture was observed for the resin produced according to example 2 with line speeds up to 35 m/min, which is commonly used in industry.

The results show that by using the modified material the melt fracture is not observed at high line speeds and the surface quality is improved.

**Table 2:**

| Sample | Line speed (m/min) | Surface quality (1-10) | Profile geometry (1-10) | Occurence of melt fracture (m/min) |
|---|---|---|---|---|
| Base resin | 10 | 6 | 8 | Observed at |
| (Example 1) | 35 | 3 | 6 | 13m/min |
| Modified resin | 10 | 7 | 8 | not observed |
| (Example 2) | 35 | 8 | 8 | |

Surface quality was also measured with help of a profilometer, Alphastep AS500. The results of these measurements are given in Table 3.

The arithmetic average coarseness (Ra, unit µm) was measured according to ISO 468-1982 and ISO 4287- 1997 by using a 12.5 µm R diamond contact needle, a measuring force of 10.4 mg, a measuring speed of 100 µm/s, a sample length of 0.5 mm and a horizontal resolution of 2 µm.

**Table 3:**

| Sample | Surface coarseness - Bottom of slot, Ra (µm) | Surface coarseness -Side of slot, Ra (µm) |
|---|---|---|
| Base resin (Example 1) | 5.80 ±2.54 | 5.84 ±1.41 |
| Modified resin (Example 2) | 2.27 ± 0.69 | 2.42 ± 0.40 |

Also Table 3 shows that the modified resin has a superior smoothness compared to the unmodified resin.

Standard used in measurements were: ISO 468-1982 Surface roughness - Parameters, their values and general rules for specifying requirement; ISO 3274: 1988, Geometric product specifications (GPS)- Surface texture: profile method - Nominal characteristics of contact (stylus) instruments; ISO 4287: 1997 Geometric product specifications (GPS)- Surface texture: profile method - Terms, definitions and surface texture parameters, ISO 4287/2:-1984, surface roughness - terminology - Part 2: Measurement of surface roughness parameters; ISO 4288: 1996, Geometric product specifications (GPS)- Surface texture: profile method - Rules and procedures for assessment of surface texture.

## Claims

1. Multimodal polyethylene resin composition for fibre supporting elements for fibre optic cables having a MFR₅ of 0.10 to 1.0 g/10 min, a density of 935 to 960 kg/m³ and a flow rate ratio FRR_{21/5} of 30 to 150 obtainable by a process comprising the treatment of a base resin (C), which comprises a low molecular weight component (A) and a high molecular weight component (B), in the presence of free radical initiators to incorporate long chain branches.

2. Multimodal polyethylene resin composition according to claim 1 wherein said composition has a MFR₅ of 0.15 to 0.5 g/10 min, a density of 942 to 955 kg/m³ and a flow rate ratio FRR_{21/5} of 30 to 60.

3. Multimodal polyethylene resin composition according to any of the preceding claims wherein said component (A) is a homopolymer of ethylene containing less than 0.5% by weight units derived from C₃ to C₂₀ alpha-olefin comonomers and said component (B) contains from 0.05 to 10% by mole C₃ to C₂₀ alpha-olefin comonomer units.

4. Multimodal polyethylene resin composition according to any of the preceding claims wherein the ratio of (A):(B) of components (A) and (B) is in the range of 40:60 to 60:40.

5. Multimodal polyethylene resin composition according to any of the preceding claims according to claim 4 wherein said ratio of components (A):(B) is in the range of 40:60 to 50:50.

6. Multimodal polyethylene resin composition according to any of the preceding claims according to claim 4 wherein said ratio of components (A):(B) is in the range of 44:56 to 50:50.

7. Multimodal polyethylene resin composition according to any of the preceding claims wherein said component (A) has a density of 940 to 980 kg/m³, an average molecular weight of 5,000 to 50,000 g/mol and a MFR₂ of 50 to 2,000 g/10 min, said component (B) has an average molecular weight of 100,000 to 1,000,000 g/mol and said base resin (C) has a density of 935 to 960 kg/m³, a MFR₅ of 0.1 to 1.0 g/10 min and a FRR_{21/5} of 10 to 130.

8. Multimodal polyethylene resin composition according to any of the preceding claims wherein said component (A) has a density of 950 to 980 kg/m³, an average molecular weight of 10,000 to 40,000 g/mol and a MFR₂ of 100 to 1,000 g/10 min, said component (B) has an average molecular weight of 300,000 to 900,000 g/mol and said base resin (C) has a melt flow ratio MFR₅ of 0.2 to 0.9 g/10 min and a FRR_{21/5} of 20 to 70.

9. Multimodal polyethylene resin composition according to any of the preceding claims wherein said component (A) has a density of 960 to 975 kg/m³ and a MFR₂ of 250 to 800 g/10 min and said base resin (C) has a MFR₅ of 0.2 to 0.8 g/10 min and a FRR_{21/5} of 25 to 50.

10. Multimodal polyethylene resin composition according to any of the preceding claims wherein the half life of said free radical initiators during ten hours is from 40 to 300°C.

11. Multimodal polyethylene resin composition according to any of the preceding claims wherein said free radical initiator is selected from the group of azo compounds, peroxy compounds and redox initiators.

12. Multimodal polyethylene resin composition according to any of the preceding claims wherein said free radical initiator is added as a masterbatch.

13. Multimodal polyethylene resin composition according to any of the preceding claims wherein said treatment of said base resin (C) is carried out in an extruder.

14. An optical fibre supporting element comprising the multimodal polyethylene resin composition according to any of the preceding claims.

15. An optical fibre supporting element according to claim 14 wherein the element is formed as a slotted core.

16. A fibre optic cable comprising an optical fibre supporting element according to claims 14 or 15.
